# DEMANDE DE BREVET EUROPEEN

(11) **EP 4 756 659 A1**
(43) Date de publication de la demande: **10.06.2026**
(21) Numéro de dépôt: 24307045.5
(22) Date de dépôt: 06.12.2024
(51) Int. Cl.: G06F 21/79, G06F 21/57, G06F 21/44, G06F 21/64

(54) **PROCÉDÉ D'ENRÔLEMENT D'UN PÉRIPHÉRIQUE DE STOCKAGE ET SYSTÈME INFORMATIQUE ASSOCIÉ**

(71) Demandeur: BULL SAS, 78340 Les Clayes-Sous-Bois (FR)
(72) Inventeur: KELLER, Christophe, 13008 MARSEILLE (FR)
(74) Mandataire: IPAZ

(57) **Abrégé**

L'invention concerne un procédé d'enrôlement, auprès d'une plateforme matérielle, d'un périphérique SED associé à une phrase secrète, le procédé d'enrôlement comprenant les étapes :
- exécution d'une séquence de démarrage comprenant, pour chaque registre PCR d'un cryptoprocesseur de la plateforme matérielle, une vérification d'une conformité d'un composant correspondant, une valeur courante de chaque registre PCR étant fonction d'un résultat de ladite vérification de conformité ;
- à l'issue de la séquence de démarrage, fourniture, à un emplacement mémoire sécurisé du cryptoprocesseur, d'une clé courante dépendant de la valeur courante d'au moins un registre-clé prédéterminé parmi les registres PCR ;
- si le contenu de l'emplacement mémoire sécurisé est lisible en réponse à la fourniture de la clé courante, transmission du contenu de l'emplacement mémoire sécurisé à un disque chiffré du périphérique SED.

## Description

### Domaine technique

La présente invention concerne un procédé d'enrôlement d'un périphérique de stockage chiffré auprès d'une plateforme matérielle au sein d'un système informatique.

L'invention concerne également un programme d'ordinateur et un dispositif mettant en oeuvre un tel procédé.

L'invention s'applique au domaine de l'enrôlement et de l'authentification automatique de périphériques de stockage chiffrés.

### État de la technique

Il est connu de recourir à des périphériques de stockage chiffrés, et en particulier des disques SSD (de l'anglais « *Solid-State Drive »,* ou disque statique à semi-conducteurs) de type SED (de l'anglais *« Self Encrypting Drive »,* ou disque à autochiffrement) présentant un fonctionnement conforme aux spécifications Opal établies par le groupement d'experts *« Trusted Computing Group ».*

Par la suite, de tels disques seront appelés « périphériques SED Opal ».

De façon classique, un périphérique SED Opal met en oeuvre une phrase secrète destinée à déchiffrer une clé de chiffrement/déchiffrement du disque.

Plus précisément, lorsque le disque est verrouillé, seule une zone de celui-ci, dite *« Shadow MBR »,* est vue par le micrologiciel (en anglais *« firmware* ») de la plateforme matérielle (un ordinateur) à laquelle il est raccordé. Une telle zone stocke une image de prédémarrage (ou PBA, de l'anglais « *Pre-Boot Authentication* »).

Lors du démarrage de la plateforme matérielle, l'image de prédémarrage demande la phrase secrète au micrologiciel de ladite plateforme matérielle. Si celle-ci est correcte, l'image de prédémarrage initialise le déblocage du disque et effectue un redémarrage.

Au prochain redémarrage, sans coupure d'alimentation, c'est le disque déchiffré (et, en particulier, le système d'exploitation cible stocké dans celui-ci) qui est exposé et démarré.

Un tel périphérique SED Opal présente, en particulier, des performances supérieures (en lecture/écriture) par rapport à un disque mettant en oeuvre une solution de chiffrement logicielle.

Néanmoins, un tel périphérique SED Opal ne donne pas entière satisfaction.

En effet, l'utilisation d'un périphérique SED Opal dans un système embarqué nécessitant un démarrage automatique, sans interaction utilisateur, s'avère difficile, dans la mesure où une saisie manuelle de la phrase secrète n'est pas possible.

En outre, un périphérique SED Opal usuel est susceptible d'être lu grâce à n'importe quelle plateforme matérielle, à partir du moment où la phrase secrète est connue.

Un but de la présente invention est de remédier à au moins un des inconvénients de l'état de la technique.

Un autre but de l'invention est de proposer une méthode d'enrôlement d'un périphérique SED Opal qui soit entièrement automatique, et qui n'autorise un enrôlement du disque qu'auprès d'une plateforme matérielle prédéterminée.

### Exposé de l'invention

À cet effet, l'invention concerne un procédé du type précité, dans lequel le périphérique de stockage chiffré étant un périphérique de stockage SSD de type SED, formant un périphérique SED, associé à une phrase secrète de déchiffrement respective,
la plateforme matérielle comprenant un cryptoprocesseur comportant une mémoire non-volatile et une mémoire volatile,
la mémoire non-volatile comprenant un emplacement mémoire sécurisé prédéterminé, un contenu de l'emplacement mémoire sécurisé étant lisible uniquement si une clé fournie audit emplacement mémoire sécurisé est égale à une clé attendue prédéterminée,
la mémoire volatile comprenant au moins un registre de configuration de plateforme, chacun formant un registre PCR, chaque registre PCR étant associé à un composant matériel ou logiciel correspondant du système informatique,
le procédé d'enrôlement comprenant les étapes :
   - exécution d'une séquence de démarrage du système informatique, le périphérique SED étant connecté à la plateforme matérielle, la séquence de démarrage comprenant, pour chaque registre PCR, une vérification d'une conformité du composant correspondant, une valeur courante de chaque registre PCR étant fonction d'un résultat de ladite vérification de conformité ;
   - à l'issue de la séquence de démarrage, fourniture, à l'emplacement mémoire sécurisé, d'une clé courante dépendant de la valeur courante d'au moins un registre-clé prédéterminé parmi les registres PCR ;
   - si le contenu de l'emplacement mémoire sécurisé est lisible en réponse à la fourniture de la clé courante, transmission du contenu de l'emplacement mémoire sécurisé à un disque chiffré du périphérique SED.

En effet, grâce à un tel procédé d'enrôlement, le déchiffrement du périphérique SED n'est possible que si plusieurs conditions sont simultanément réunies, à savoir :
- le contenu de l'emplacement mémoire sécurisé de la plateforme matérielle est égal à la phrase secrète associée au périphérique SED connecté à ladite plateforme matérielle ;
- l'adresse de l'emplacement mémoire sécurisé est connu ;
- le contenu de l'emplacement mémoire sécurisé est lisible en réponse à la fourniture de la clé courante ; et
- chaque registre-clé est connu ; et
- la valeur courante de chaque registre-clé est égale à une valeur requise pour obtenir la clé courante courants, ce qui implique une mesure conforme de chaque composant (logiciel et/ou matériel) correspondant avec leur état lors de l'initialisation de l'emplacement mémoire (au sein de la plateforme matérielle et/ou du périphérique SED).

De tels critères garantissent qu'un accès au périphérique SED n'est possible qu'au moyen d'une plateforme matérielle autorisée qui contient la phrase secrète. Similairement, dans le cas où la séquence de démarrage comprend également une mesure du périphérique SED, un accès à l'emplacement mémoire sécurisé n'est possible que si un périphérique SED préalablement associé à la plateforme matérielle est connecté à celle-ci.

De façon avantageuse, le procédé selon l'invention présente une ou plusieurs des caractéristiques suivantes, prises isolément ou selon toute combinaison techniquement possible :

le procédé comprend, en outre, un déchiffrement du périphérique SED si le contenu transmis est égal à la phrase secrète correspondante ;

au moins un registre-clé est associé à un périphérique connecté à la plateforme matérielle au moyen d'une interface, le périphérique SED étant relié à l'interface durant la séquence de démarrage ;

la valeur de chaque registre PCR est réinitialisée au redémarrage et/ou à la mise sous tension de la plateforme matérielle ;

le procédé comprend, si le contenu de l'emplacement mémoire sécurisé n'est pas lisible en réponse à la fourniture de la clé courante, les étapes :
- tentative d'accès au contenu de l'emplacement mémoire sécurisé sans fournir de clé ;
- si le contenu de l'emplacement mémoire sécurisé est lisible sans clé, transmission du contenu de l'emplacement mémoire sécurisé au disque chiffré du périphérique SED ;
- si le contenu transmis est égal à la phrase secrète associée au périphérique SED :
   - génération de la clé courante à partir de la valeur courante de chaque registre-clé prédéterminé ; et
   - écriture, dans l'emplacement mémoire sécurisé, de la phrase secrète en association avec la clé courante générée, en tant que clé attendue pour autoriser la lecture du contenu de l'emplacement mémoire sécurisé ;

la séquence de démarrage comprend une comparaison d'une signature privée d'une image de prédémarrage du périphérique SED à une signature publique attendue correspondante stockée dans la mémoire non-volatile du cryptoprocesseur, le procédé comprenant l'émission d'un signal d'erreur si la signature privée de l'image de prédémarrage diffère de la signature publique attendue.

Selon un autre aspect de l'invention, il est proposé un programme d'ordinateur comprenant des instructions exécutables qui, lorsqu'elles sont exécutées par ordinateur, mettent en oeuvre les étapes du procédé tel que défini ci-dessus.

Le programme d'ordinateur peut être en tout langage informatique, tel que par exemple en langage machine, en C, C++, etc.

Selon un autre aspect de l'invention, il est proposé un système informatique comprenant un périphérique de stockage chiffré et une plateforme matérielle,
le périphérique de stockage chiffré étant un périphérique de stockage SSD de type SED, formant un périphérique SED, associé à une phrase secrète de déchiffrement respective,
la plateforme matérielle comprenant un cryptoprocesseur comportant une mémoire non-volatile et une mémoire volatile,
la mémoire non-volatile comprenant un emplacement mémoire sécurisé prédéterminé, un contenu de l'emplacement mémoire sécurisé étant lisible uniquement si une clé fournie audit emplacement mémoire sécurisé est égale à une clé attendue prédéterminée,
la mémoire volatile comprenant au moins un registre de configuration de plateforme, chacun formant un registre PCR, chaque registre PCR étant associé à un composant matériel ou logiciel correspondant du système informatique,
le système informatique étant configuré pour :
   - exécuter une séquence de démarrage, le périphérique SED étant connecté à la plateforme matérielle, la séquence de démarrage comprenant, pour chaque registre PCR, une vérification d'une conformité du composant correspondant, une valeur courante de chaque registre PCR étant fonction d'un résultat de ladite vérification de conformité ;
   - à l'issue de la séquence de démarrage, fournir, à l'emplacement mémoire sécurisé, d'une clé courante dépendant de la valeur courante d'au moins un registre-clé prédéterminé parmi les registres PCR ;
   - si le contenu de l'emplacement mémoire sécurisé est lisible en réponse à la fourniture de la clé courante, transmettre le contenu de l'emplacement mémoire sécurisé à un disque chiffré du périphérique SED.

Le dispositif selon l'invention peut être tout type d'appareil tel qu'un serveur, un ordinateur, une tablette, un calculateur, un processeur, une puce informatique, programmé pour mettre en oeuvre le procédé selon l'invention, par exemple en exécutant le programme d'ordinateur selon l'invention.

### Brève description des figures

L'invention sera mieux comprise à la lecture de la description qui va suivre, donnée uniquement à titre d'exemple non limitatif et faite en se référant aux dessins annexés sur lesquels :
la figure 1 est un système informatique selon l'invention ; et
la figure 2 est un ordinogramme d'un procédé d'enrôlement mis en oeuvre par le système informatique de la figure 1.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée

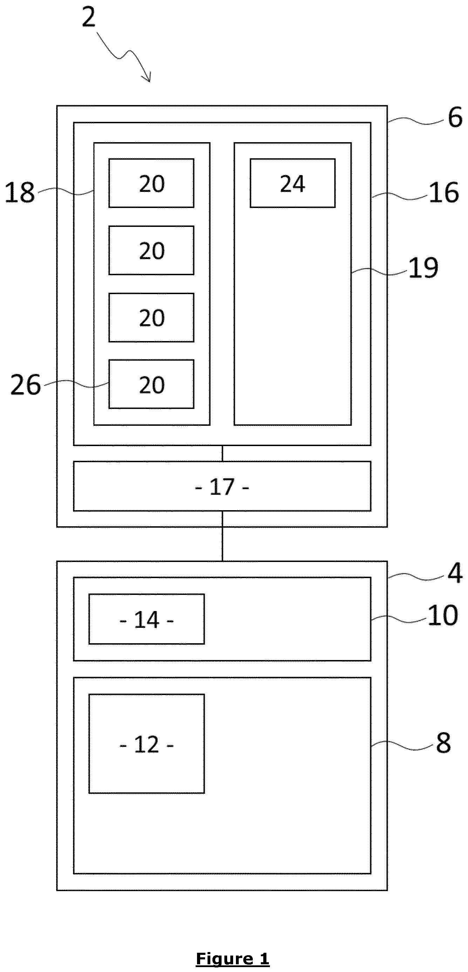

Un système informatique 2 selon l'invention est représenté sur la figure 1.

Le système informatique 2 est, par exemple, un système embarqué.

Le système informatique 2 présente une architecture permettant l'enrôlement d'un périphérique de stockage chiffré 4 auprès d'une plateforme matérielle 6 autorisée.

### Périphérique de stockage chiffré 4

Le périphérique de stockage chiffré 4 est un périphérique de stockage SSD (de l'anglais *« Solid-State Drive »,* ou disque statique à semi-conducteurs).

Plus précisément, le périphérique de stockage chiffré 4 est un périphérique de stockage SSD de type SED (de l'anglais « *Self Encrypting Drive »,* ou disque à autochiffrement) présentant un fonctionnement conforme aux spécifications Opal établies par le groupement d'experts *« Trusted Computing Group ».*

De telles spécifications sont disponibles en ligne à l'adresse : https://trustedcomputinggroup.org/resource/storage-work-group-storage-security-subsystem-class-opal/

Par la suite, le périphérique de stockage chiffré 4, de type SED et conforme aux spécifications Opal, sera simplement désigné par l'expression « périphérique SED ».

Le périphérique SED 4 comporte un disque chiffré 8 et une zone de démarrage 10.

Plus précisément, le périphérique SED 4 est configuré de sorte que la zone de démarrage 10 soit le seul espace vu par la plateforme matérielle 6 tant que la disque chiffré 8 n'a pas été déverrouillé (c'est-à-dire déchiffré). En outre, le périphérique SED 4 est configuré de sorte que le disque chiffré 8 soit directement accessible par la plateforme matérielle 6 une fois ledit disque chiffré 8 déverrouillé.

### Disque chiffré 8

Le disque chiffré 8 est configuré pour stocker tout type de données, par exemple un système d'exploitation 12.

Lorsque le périphérique SED 4 est dans son état chiffré, le disque chiffré 8 est chiffré à l'aide d'une clé de chiffrement, par exemple une clé AES-256 CBC (de l'anglais « *Advanced Encryption Standard Advanced with a 256-bit key in Cipher Block Chaining mode* », ou standard de cryptage avancé avec une clé 256 bit à mode d'enchaînement de blocs).

Dans ce cas, le disque chiffré 8 est associé à une phrase secrète destinée à déchiffrer la clé de chiffrement.

### Zone de démarrage 10

La zone de démarrage 10 (dite « *Shadow MBR »* en anglais, pour « zone de démarrage masquée ») est configurée pour stocker une image de prédémarrage 14 (ou PBA, de l'anglais « *Pre-Boot Authentication* »). Plus précisément, l'image de prédémarrage 14 est adaptée pour communiquer avec un cryptoprocesseur 16 (décrit ultérieurement) de la plateforme matérielle 6, lorsque le périphérique SED 4 est connecté à ladite plateforme matérielle 6 et que le disque chiffré 8 n'a pas encore été déchiffré.

De préférence, l'image de prédémarrage 14 est configurée pour stocker une adresse d'un emplacement mémoire sécurisé 24 prédéterminé de cryptoprocesseur. Un tel emplacement mémoire sécurisé sera décrit ultérieurement, en référence à la plateforme matérielle 6.

De préférence encore, l'image de prédémarrage 14 est configurée pour stocker une liste de registres-clés 26 prédéterminés de cryptoprocesseur. De tels registres-clés seront décrits ultérieurement, en référence à la plateforme matérielle 6.

En outre, dans le cas où le disque chiffré 8 n'a pas encore été déchiffré, l'image de démarrage 14 est adaptée pour demander, lors d'un démarrage (en particulier un premier démarrage) du système informatique 2 (c'est-à-dire de la plateforme matérielle 6 à laquelle est connecté le périphérique SED 4), la phrase secrète à ladite de la plateforme matérielle 6, et en particulier au cryptoprocesseur 16 de la plateforme matérielle 6.

De préférence, l'image de démarrage présente une signature cryptographique respective.

Des caractéristiques supplémentaires du périphérique SED 4 ressortiront de la description du procédé d'enrôlement mis en oeuvre par le système informatique 2.

### Plateforme matérielle 6

La plateforme matérielle 6 comprend, notamment, le cryptoprocesseur 16 mentionné précédemment.

En outre, la plateforme matérielle comprend une interface 17 pour la connexion d'un périphérique de stockage, en particulier pour le raccordement du périphérique SED 4. Une telle interface 17 est adaptée pour autoriser une communication entre le périphérique SED 4 et le cryptoprocesseur 16.

Le cryptoprocesseur 16 est un cryptoprocesseur conforme au standard cryptographique TPM (de l'anglais « *Trusted Platform Module* »*,* ou module de plateforme fiable) défini par le groupement d'experts « *Trusted Computing Group* » (TCG).

Les détails d'un tel standard sont disponibles en ligne à l'adresse : https://trustedcomputinggroup.org/work-groups/trusted-platform-module

De façon classique, le cryptoprocesseur 16 comporte une mémoire non-volatile 18 et une mémoire volatile 19.

### Mémoire non-volatile 18

Le cryptoprocesseur 16 est configuré de façon à opérer en tant que coffre-fort, de sorte que l'accès à la mémoire non volatile 18 soit protégé, par conception électronique ou encore par méthodologie d'accès.

La mémoire non-volatile 18 est, notamment, destinée à stocker des objets (valeurs, politiques d'accès) mis en jeu dans la vérification d'une chaîne de confiance.

En particulier, la mémoire non-volatile 18 comprend au moins un espace de stockage sécurisé, dont l'emplacement mémoire sécurisé 24 mentionné précédemment. Un tel emplacement mémoire sécurisé 24 est, notamment, défini par son adresse.

L'emplacement mémoire sécurisé 24 est configuré de sorte que son contenu soit lisible uniquement si une clé fournie audit emplacement mémoire sécurisé 24 est égale à une clé attendue prédéterminée.

L'emplacement mémoire sécurisé 24 est destiné à stocker la phrase secrète du périphérique SED 4 vis-à-vis duquel la plateforme matérielle 6 est une plateforme matérielle autorisée.

### Mémoire volatile 19

La mémoire volatile 19 comporte au moins un registre de configuration de plateforme 20, chacun dit « registres PCR ».

Par exemple, la mémoire volatile 19 comprend au moins vingt-quatre registres PCR 20 (selon le standard TCG).

Chaque registre PCR 20 est associé à un composant correspondant du système informatique 2, ledit composant étant un composant logiciel ou un composant matériel. Certains registres PCR 20 présentent une allocation spécifique, selon une norme préétablie, tandis que d'autres sont susceptibles d'être utilisés selon les besoins et la configuration de la plateforme matérielle 6.

En outre, chaque registre PCR 20 est assigné à un rang respectif.

En particulier, pour chaque registre PCR 20, une valeur courante correspondante est fonction d'un résultat d'une étape de vérification de conformité (dite « mesure ») du composant (matériel ou logiciel) correspondant. Par exemple, la valeur courante d'un registre PCR 20 donné quelconque est un résultat de la mise en oeuvre d'une fonction de hachage prédéterminée prenant, en argument, un état mesuré du composant correspondant.

Avantageusement, au moins un registre PCR 20 est associé au composant connecté à la plateforme matérielle par le biais de l'interface 17. Une telle caractéristique est avantageuse, dans la mesure où, comme cela ressortira de la description qui va suive, elle est susceptible de prévenir l'obtention de la phrase secrète stockée dans la plateforme matérielle 6 depuis un périphérique relié à l'interface 17 et qui n'est pas le périphérique SED vis-à-vis duquel ladite plateforme matérielle 6 est une plateforme matérielle autorisée (c'est-à-dire le périphérique SED dont la phrase secrète est stockée dans le cryptoprocesseur 16 de la plateforme matérielle 6).

Avantageusement, chaque registre PCR 20 est configuré pour que la valeur correspondante soit réinitialisée au redémarrage et/ou à la mise sous tension de la plateforme matérielle 6. Une telle caractéristique est avantageuse, dans la mesure où, à l'issue d'un redémarrage/mise sous en tension, aucune valeur antérieure n'est disponible à des fins d'analyse en cas de de tentative de corruption ou d'intrusion.

En outre, parmi l'ensemble des registres PCR 20 du cryptoprocesseur 16, au moins un registre PCR 20 prédéterminé forme un registre-clé 26. L'intérêt de chaque registre-clé 26 ressortira de la description qui va suivre.

Le choix de chaque registre-clé 26 dépend des paramètres de configuration de la chaîne de confiance mise en place sur la plateforme matérielle 6 (c'est-à-dire sur la portée de la chaîne de confiance).

### Enrôlement

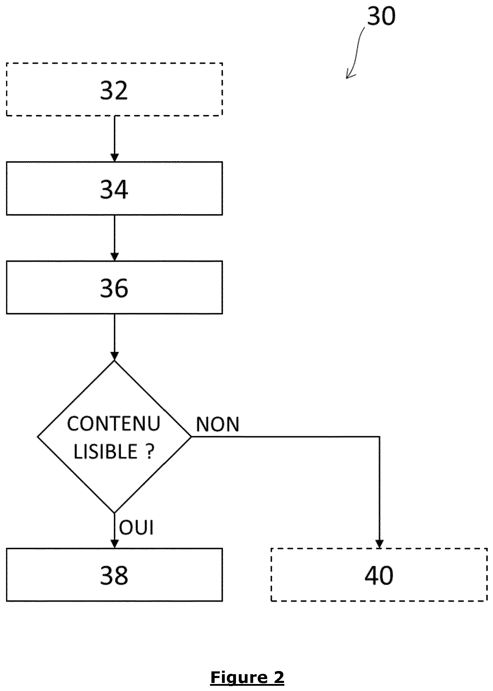

Le système informatique 2 est configuré pour mettre en oeuvre un procédé d'enrôlement 30 (figure 2) du périphérique SED 4, une fois ledit périphérique SED 4 connecté à la plateforme matérielle 6 par l'intermédiaire de l'interface 17.

Un tel procédé d'enrôlement 30 comprend une étape de démarrage 34, une étape 36 de génération de clé courante (dite « étape de génération ») et une étape d'accès 38.

De préférence, le procédé d'enrôlement 30 comprend, en outre, une étape d'association 32, antérieure à l'étape de démarrage 34.

De préférence encore, le procédé d'enrôlement comprend également une étape de diagnostic 40, mise en oeuvre en cas d'échec de l'étape d'accès 38.

### Association 32

De préférence, le périphérique SED 4 et la plateforme matérielle 6 autorisée à accéder audit périphérique SED 4 sont associés entre eux, au cours de l'étape d'association 32.

De façon classique, avant une première utilisation du périphérique SED 4, le chiffrement du périphérique SED 4 n'est pas activé, de sorte qu'il est directement accessible sans authentification.

Dans ce cas, le système informatique 2 est configuré pour réaliser un premier démarrage sans requérir d'échange de phrase secrète entre la plateforme matérielle 6 et le périphérique SED 4.

Avantageusement, un micrologiciel de la plateforme matérielle 6 est configuré pour accepter, au cours d'un tel premier démarrage, un amorçage sur un média amovible (un démarrage sécurisé UEFI optionnel, décrit ultérieurement, étant désactivé). Une telle caractéristique est avantageuse, dans la mesure où aucun système d'exploitation n'est stocké sur le périphérique SED lors de sa première utilisation.

En outre, le périphérique SED 4 est configuré pour, à l'issue d'un tel premier démarrage, stocker des données dans le disque chiffré 8, en particulier le système d'exploitation 12.

Le périphérique SED 4 est également configuré de sorte que, à l'issue du premier démarrage, l'image de prédémarrage 14 soit chargée et activée (et éventuellement signée avec les certificats requis pour un démarrage sécurisé UEFI). Dans ce cas, la phrase secrète requise pour le déchiffrement du périphérique SED 4 est configurée. Par exemple, une telle phase secrète est saisie par un utilisateur.

En outre, la plateforme matérielle 6 est configurée pour stocker, durant l'activation de l'image de prédémarrage 14, ladite phrase secrète dans l'emplacement mémoire sécurisée 24 prédéterminé.

De préférence, dans ce cas, la phrase secrète est stockée dans l'emplacement mémoire sécurisée 24 prédéterminé pour être lue sans politique d'accès. En d'autres termes, dans ce cas, la clé attendue permettant l'accès au contenu de l'emplacement mémoire sécurisée 24 est une absence de clé.

Puis, le verrouillage du périphérique SED 4 est activé. Le système informatique 2 est arrêté et mis hors tension, en vue de son redémarrage. Le périphérique SED 4 est alors, par exemple, susceptible d'être déconnecté de la plateforme matérielle 6.

### Démarrage 34

Le système informatique 2 est configuré pour exécuter, lors d'une étape de démarrage 34 ultérieure à l'étape d'association 32, une séquence de démarrage correspondante. Plus précisément, dans ce cas, la plateforme matérielle 6 est connectée à un périphérique SED 4. En outre, dans ce cas, il n'est pas garanti que la plateforme matérielle 6 soit une plateforme matérielle autorisée vis-à-vis du périphérique SED 4.

En particulier, chacun parmi le micrologiciel et un chargeur GRUB de la plateforme matérielle 6 est configuré pour vérifier séquentiellement, au cours d'une telle étape de démarrage 34, la conformité de chacun parmi un ensemble de composants matériels et/ou logiciels prédéterminés.

Par exemple, les composants mesurés par le micrologiciel sont :
- un code exécutable UEFI (*firmware*)*,* associée au registre PCR de rang 0 ;
- des drivers UEFI, associée au registre PCR de rang 2 ;
- des paramètres UEFI, associée au registre PCR de rang 3 ;
- une zone de démarrage, associée au registre PCR de rang 4 ;
- une table de partitionnement *GUID,* associée au registre PCR de rang 5.

Par exemple, les composants mesurés par le chargeur GRUB sont :
- des paramètres de démarrage d'un noyau de système d'exploitation (par exemple un noyau Linux), associés au registre PCR de rang 8 ;
- des fichiers chargés par GRUB (noyau, *INITial RamDisk*)*,* associés au registre PCR de rang 9.

Dans ce cas, pour chaque composant vérifié, et comme cela a été décrit précédemment, le registre PCR 20 correspondant est configuré pour stocker une valeur dépendant de la mesure de conformité respective.

Avantageusement, le système informatique 2 (en particulier, la plateforme matérielle 6) est configuré pour mettre en oeuvre un démarrage sécurisé UEFI (en anglais « *Secure Boot UEFI »*)*,* de l'anglais « *Unified Extensible Firmware Interface »,* ou interface micrologicielle extensible unifiée.

De façon classique, dans une chaîne de démarrage sécurisé UEFI, chaque étape du processus de démarrage comprend une vérification d'une signature cryptographique sur l'exécutable associé à l'étape suivante avant qu'il ne soit lancé. Ainsi, le micrologiciel vérifie la signature du chargeur, et le chargeur vérifie les signatures de tous les objets du système informatique qu'il charge.

En outre, dans ce cas, les objets de la chaîne ont été préalablement signés à l'aide de clés privées qui correspondent aux clés publiques préchargées dans la mémoire non-volatile du cryptoprocesseur.

Si l'un des modules logiciels de la chaîne de démarrage est un programme malveillant, les signatures publique et privée ne correspondent pas et le programme n'est pas chargé et exécuté.

En outre, si l'un des objets de la chaîne de démarrage a été modifié de sorte que sa signature ne soit plus valide, le démarrage de la plateforme matérielle est arrêté et une réinstallation est indiquée par le micrologiciel.

Dans ce cas, le micrologiciel de la plateforme matérielle 6 est configuré pour vérifier (si le démarrage sécurisé UEFI est activé) la signature de l'image de démarrage 14 (mentionnée précédemment), en particulier une signature des modules logiciels de l'image de démarrage 14.

Le démarrage sécurisé UEFI et le démarrage par phrase secrète sont complémentaires, dans la mesure où ils n'utilisent pas les mêmes mécanismes de vérification d'intégrité et d'authenticité de la plateforme matérielle 6 (dont les clés et registres PCR). Le recours additionnel au démarrage sécurisé UEFI résulte en une sécurité accrue du système informatique 2, notamment dans l'accès au périphérique SED 4.

### Génération de la clé courante 34

En outre, l'image de prédémarrage 14 est configurée pour, à l'issue de l'étape de démarrage 34, générer, au cours de l'étape de génération 36, la clé courante en fonction de la valeur de chaque registre-clé 26.

Par exemple, l'image de prédémarrage 14 est configurée pour générer la clé courante en tant que résultat d'une concaténation de la valeur de chacun des registres-clés 26 prédéterminés, notamment du rang le plus petit au rang le plus élevé.

L'image de prédémarrage 14 est également configurée pour fournir la clé courante générée à l'emplacement mémoire sécurisé 24 (dont l'adresse a été préalablement enregistrée dans l'image de démarrage 14) pour tenter de lire le contenu dudit emplacement mémoire sécurisé 24.

### Accès 38 au contenu secret

Dans le cas où le contenu de l'emplacement mémoire sécurisé 24 est lisible en réponse à la fourniture de la clé courante, l'image de prédémarrage 14 est configurée pour transmettre, au cours de l'étape d'accès 38, ledit contenu de l'emplacement mémoire sécurisé 24 au disque chiffré 8 pour son déchiffrement.

Il en résulte que si le contenu transmis est égal à la phrase secrète associée au périphérique SED 4 connecté à la plateforme matérielle 6, le déchiffrage dudit périphérique SED 4 est mis en oeuvre.

### Diagnostic 40

Dans le cas où le contenu de l'emplacement mémoire sécurisé 24 n'est pas lisible en réponse à la fourniture de la clé courante, l'image de prédémarrage 14 est configurée pour, au cours de l'étape de diagnostic 40, tenter de lire le contenu de l'emplacement mémoire sécurisé 24 sans fournir de clé, c'est-à-dire pour tenter une lecture sans politique d'accès.

L'image de prédémarrage 14 est, en outre, configurée pour transmettre, en cas de succès de la lecture sans politique d'accès, le contenu de l'emplacement mémoire sécurisé 24 au disque chiffré 8 pour son déchiffrement.

En outre, dans le cas où le contenu transmis est égal à la phrase secrète associée au périphérique SED 4 connecté à la plateforme matérielle 6 (c'est-à-dire si le déchiffrage du périphérique SED 4 est possible), l'image de prédémarrage 14 est configurée pour :
- générer la clé courante à partir de la valeur courante de chaque registre-clé 26 prédéterminé ; et
- écrire, dans l'emplacement mémoire sécurisé 24, la clé courante générée en tant que clé attendue pour autoriser la lecture de l'emplacement mémoire sécurisé 24 (c'est-à-dire l'accès à son contenu), en association avec la phrase secrète.

Il en résulte une chaîne de confiance, dans laquelle l'emplacement mémoire sécurisé 24 n'est lisible que si une conformité de chaque composant associé aux registres-clés 26 a été vérifiée.

Il convient de noter que, dans le cas où, au cours de l'étape d'association 32, la phrase secrète est initialement stockée dans l'emplacement mémoire sécurisée 24 prédéterminé pour être lue sans politique d'accès, la tentative d'accès avec politique d'accès échoue, de sorte que l'étape de diagnostic est mise en oeuvre.

En variante, la génération de la clé courante est réalisée par la plateforme matérielle 6 elle-même, en réponse à une demande de phrase secrète reçue depuis l'image de prédémarrage 14 du périphérique SED 4.

Dans ce cas, un composant de la plateforme matérielle 6 est configuré pour fournir la clé courante générée à l'emplacement mémoire sécurisé 24 (dont l'emplacement a été pré-enregistré dans ledit composant).

En outre, dans ce cas, la plateforme matérielle 6 est configurée de façon à transmettre, si le contenu de l'emplacement mémoire sécurisé 24 est lisible en réponse à la fourniture de la clé courante, ledit contenu de l'emplacement mémoire sécurisé 24 à l'image de prédémarrage 14.

### Fonctionnement

Le fonctionnement du système informatique 2 va maintenant être décrit en référence aux figures 1 et 2.

### Association 32

De préférence, au cours de l'étape d'association 32, le périphérique SED 4 et la plateforme matérielle 6 autorisée à accéder audit périphérique SED 4 sont associés entre eux.

Dans ce cas, le système informatique 2 réalise un premier démarrage sans requérir d'échange de phrase secrète entre la plateforme matérielle 6 et le périphérique SED 4, puis stocke, à l'issue du premier démarrage, des données dans le disque chiffré 8 (par exemple, le système d'exploitation 12).

Puis, l'image de prédémarrage 14 du périphérique SED 4 est chargée et activée, et la phrase secrète requise pour le déchiffrement du périphérique SED 4 est configurée. Dans ce cas, la plateforme matérielle 6 stocke ladite phrase secrète dans l'emplacement mémoire sécurisée 24 prédéterminé.

Puis, le verrouillage du périphérique SED 4 est activé. Le système informatique 2 est arrêté et mis hors tension, en vue de son redémarrage. Le périphérique SED 4 est alors susceptible d'être déconnecté de la plateforme matérielle 6.

### Démarrage 34

Puis, lors de l'étape de démarrage 34, la plateforme matérielle 6 est connectée à un périphérique SED 4, et le système informatique 2 exécute la séquence de démarrage correspondante. Une telle séquence de démarrage correspond, par exemple, à un démarrage sécurisé UEFI.

Plus précisément, le micrologiciel et le chargeur GRUB de la plateforme matérielle 6 vérifient séquentiellement la conformité de chacun parmi un ensemble de composants matériels et/ou logiciels prédéterminés.

En outre, pour chaque composant vérifié, le registre PCR 20 correspondant stocke une valeur dépendant de la mesure de conformité respective.

### Génération de la clé courante 34

Puis, au cours de l'étape de génération 36, l'image de prédémarrage 14 génère la clé courante en fonction de la valeur de chaque registre-clé 26.

En outre, l'image de prédémarrage 14 fournit la clé courante générée à l'emplacement mémoire sécurisé 24 pour tenter de lire le contenu dudit emplacement mémoire sécurisé 24.

### Accès 38 au contenu secret

Dans le cas où le contenu de l'emplacement mémoire sécurisé 24 est lisible en réponse à la fourniture de la clé courante, l'image de prédémarrage 14 transmet, au cours de l'étape d'accès 38, le contenu de l'emplacement mémoire sécurisé 24 au disque chiffré 8 pour son déchiffrement.

Si le contenu transmis est égal à la phrase secrète associée au périphérique SED 4 connecté à la plateforme matérielle 6, alors le périphérique SED 4 est déchiffré.

### Diagnostic 40

Dans le cas où le contenu de l'emplacement mémoire sécurisé 24 n'est pas lisible en réponse à la fourniture de la clé courante, alors, au cours de l'étape de diagnostic 40, l'image de prédémarrage 14 tente une lecture du contenu de l'emplacement mémoire sécurisé 24 sans politique d'accès.

En cas de succès de la lecture sans politique d'accès, l'image de prédémarrage 14 transmet le contenu de l'emplacement mémoire sécurisé 24 au disque chiffré 8 pour son déchiffrement.

En outre, si le déchiffrage du périphérique SED 4 est possible, l'image de prédémarrage 14 génère la clé courante à partir de la valeur courante de chaque registre-clé 26, puis écrit, dans l'emplacement mémoire sécurisé 24, la clé courante générée en tant que clé attendue pour l'accès à son contenu), en association avec la phrase secrète.

Bien entendu l'invention n'est pas limitée aux exemples qui viennent d'être décrits.

## Revendications

1. Procédé d'enrôlement d'un périphérique de stockage chiffré (4) auprès d'une plateforme matérielle (6) au sein d'un système informatique (2),
le périphérique de stockage chiffré (4) étant un périphérique de stockage SSD de type SED, formant un périphérique SED, associé à une phrase secrète de déchiffrement respective,
la plateforme matérielle (6) comprenant un cryptoprocesseur (16) comportant une mémoire non-volatile (18) et une mémoire volatile (19),
la mémoire non-volatile (18) comprenant un emplacement mémoire sécurisé (24) prédéterminé, un contenu de l'emplacement mémoire sécurisé (24) étant lisible uniquement si une clé fournie audit emplacement mémoire sécurisé (24) est égale à une clé attendue prédéterminée,
la mémoire volatile (19) comprenant au moins un registre de configuration de plateforme (20), chacun formant un registre PCR, chaque registre PCR (20) étant associé à un composant matériel ou logiciel correspondant du système informatique (2),
le procédé d'enrôlement comprenant les étapes :
- exécution d'une séquence de démarrage du système informatique (2), le périphérique SED (4) étant connecté à la plateforme matérielle (6), la séquence de démarrage comprenant, pour chaque registre PCR (20), une vérification d'une conformité du composant correspondant, une valeur courante de chaque registre PCR (20) étant fonction d'un résultat de ladite vérification de conformité ;
- à l'issue de la séquence de démarrage, fourniture, à l'emplacement mémoire sécurisé (24), d'une clé courante dépendant de la valeur courante d'au moins un registre-clé (26) prédéterminé parmi les registres PCR (20) ;
- si le contenu de l'emplacement mémoire sécurisé (24) est lisible en réponse à la fourniture de la clé courante, transmission du contenu de l'emplacement mémoire sécurisé (24) à un disque chiffré (8) du périphérique SED (4).

2. Procédé d'enrôlement selon la revendication 1, comprenant, en outre, un déchiffrement du périphérique SED (4) si le contenu transmis est égal à la phrase secrète correspondante.

3. Procédé selon la revendication 1 ou 2, dans lequel au moins un registre-clé (20) est associé à un périphérique connecté à la plateforme matérielle (6) au moyen d'une interface (17), le périphérique SED étant relié à l'interface (17) durant la séquence de démarrage.

4. Procédé selon l'une quelconque des revendications 1 à 3, dans lequel la valeur de chaque registre PCR (20) est réinitialisée au redémarrage et/ou à la mise sous tension de la plateforme matérielle.

5. Procédé selon l'une quelconque des revendications 1 à 4, comprenant, si le contenu de l'emplacement mémoire sécurisé (24) n'est pas lisible en réponse à la fourniture de la clé courante, les étapes :
- tentative d'accès au contenu de l'emplacement mémoire sécurisé (24) sans fournir de clé ;
- si le contenu de l'emplacement mémoire sécurisé (24) est lisible sans clé, transmission du contenu de l'emplacement mémoire sécurisé (24) au disque chiffré (8) du périphérique SED (4) ;
- si le contenu transmis est égal à la phrase secrète associée au périphérique SED (4) :
• génération de la clé courante à partir de la valeur courante de chaque registre-clé (26) prédéterminé ; et
• écriture, dans l'emplacement mémoire sécurisé (24), de la phrase secrète en association avec la clé courante générée, en tant que clé attendue pour autoriser la lecture du contenu de l'emplacement mémoire sécurisé (24).

6. Procédé selon l'une quelconque des revendications 1 à 5, dans lequel la séquence de démarrage comprend une comparaison d'une signature privée d'une image de prédémarrage du périphérique SED à une signature publique attendue correspondante stockée dans la mémoire non-volatile du cryptoprocesseur,
le procédé comprenant l'émission d'un signal d'erreur si la signature privée de l'image de prédémarrage diffère de la signature publique attendue.

7. Programme d'ordinateur comprenant des instructions exécutables qui, lorsqu'elles sont exécutées par ordinateur, mettent en en oeuvre les étapes du procédé selon l'une quelconque des revendications 1 à 6.

8. Système informatique (2) comprenant un périphérique de stockage chiffré (4) et une plateforme matérielle (6),
le périphérique de stockage chiffré (4) étant un périphérique de stockage SSD de type SED, formant un périphérique SED, associé à une phrase secrète de déchiffrement respective,
la plateforme matérielle (6) comprenant un cryptoprocesseur (16) comportant une mémoire non-volatile (18) et une mémoire volatile (19),
la mémoire non-volatile (18) comprenant un emplacement mémoire sécurisé (24) prédéterminé, un contenu de l'emplacement mémoire sécurisé (24) étant lisible uniquement si une clé fournie audit emplacement mémoire sécurisé (24) est égale à une clé attendue prédéterminée,
la mémoire volatile (19) comprenant au moins un registre de configuration de plateforme (20), chacun formant un registre PCR, chaque registre PCR (20) étant associé à un composant matériel ou logiciel correspondant du système informatique (2),
le système informatique (2) étant configuré pour :
- exécuter une séquence de démarrage, le périphérique SED (4) étant connecté à la plateforme matérielle (6), la séquence de démarrage comprenant, pour chaque registre PCR (20), une vérification d'une conformité du composant correspondant, une valeur courante de chaque registre PCR (20) étant fonction d'un résultat de ladite vérification de conformité ;
- à l'issue de la séquence de démarrage, fournir, à l'emplacement mémoire sécurisé (24), d'une clé courante dépendant de la valeur courante d'au moins un registre-clé (26) prédéterminé parmi les registres PCR (20) ;
- si le contenu de l'emplacement mémoire sécurisé (24) est lisible en réponse à la fourniture de la clé courante, transmettre le contenu de l'emplacement mémoire sécurisé (24) à un disque chiffré (8) du périphérique SED (4).
